(19) Europäisches Patentamt
European Patent Office
Office européen des brevets

(11) **EP 2 594 951 A1**

(12) **EUROPEAN PATENT APPLICATION**

(43) Date of publication:
**22.05.2013 Bulletin 2013/21**

(51) Int Cl.:
***G01R 31/40*** *(2006.01)*

(21) Application number: **11189934.0**

(22) Date of filing: **21.11.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicants:
• **Mitsubishi Electric R&D Centre Europe B.V.
1119 NS Schiphol Rijk (NL)**
Designated Contracting States:
**FR**
• **Mitsubishi Electric Corporation
Chiyoda-ku
Tokyo 100-8310 (JP)**
Designated Contracting States:
**AL AT BE BG CH CY CZ DE DK EE ES FI GB GR
HR HU IE IS IT LI LT LU LV MC MK MT NL NO PL
PT RO RS SE SI SK SM TR**

(72) Inventors:
• **David, Erwan
35708 Rennes Cedex 7 (FR)**
• **Voyer, Nicolas
35708 Rennes Cedex 7 (FR)**

(74) Representative: **Maillet, Alain
Cabinet Le Guen Maillet
5, place Newquay
B.P. 70250
35802 Dinard Cedex (FR)**

(54) **Apparatus for determining if a fault exists in a photovoltaic source**

(57)     The present invention concerns an apparatus for determining if a fault exists in a photovoltaic source. The apparatus comprises:
- means for controlling the power converter in order to get at the output of the photovoltaic source a first voltage value ($V_1$),
- means for obtaining a first current value ($I_1$) provided by the photovoltaic source when the photovoltaic source provides the first voltage value,
- means for controlling the power converter in order to get at the output of the photovoltaic source a second voltage value ($V_2$) upper than the first voltage value,
- means for obtaining a second current value ($I_2$) provided by the photovoltaic source when the photovoltaic source provides the second voltage value,
- means for obtaining a threshold value (Th) from the first current value and the first voltage value,
- means for detecting a fault in the photovoltaic source according to at least the second current value and the threshold value.

Fig. 9a

Fig. 9b

Fig. 9c

**Description**

The present invention relates generally to an apparatus for determining if a fault exists in a photovoltaic source composed of plural modules of photovoltaic cells.

A photovoltaic cell directly converts solar energy into electrical energy. The electrical energy produced by the photovoltaic cell can be extracted over time and used in the form of electric power. The direct electric power provided by a photovoltaic source is provided to conversion devices like DC-DC up/down power converter circuits and/or DC/AC inverter circuits.

Photovoltaic cells are connected each other in series and form a module of photovoltaic cells.

Modules of photovoltaic cells are connected in series and form a string of photovoltaic modules.

A photovoltaic source is composed of one string of modules of photovoltaic cells or of plural strings of modules of photovoltaic cells connected in parallel.

If at least one photovoltaic cell of a module of photovoltaic cells has a fault like a crack or a default in soldering or the presence of occulting material on the photovoltaic cell, the overall performance of the module of photovoltaic cells comprising the faulty photovoltaic cell, the string of modules of photovoltaic cells comprising the faulty module and then the photovoltaic source are deteriorated.

Fault may appear during the life of the photovoltaic source.

Fault in photovoltaic source is an important problem which needs to be detected if we need to keep good performance of the photovoltaic source over the time.

The present invention aims at providing an apparatus which enables to detect at least one fault in a photovoltaic source.

To that end, the present invention concerns an apparatus for determining if a fault exists in a photovoltaic source composed of plural modules of photovoltaic cells connected to a power converter, characterised in that the apparatus comprises:

- means for controlling the power converter in order to get at the output of the photovoltaic source a first voltage value,
- means for obtaining a first current value provided by the photovoltaic source when the photovoltaic source provides the first voltage value,
- means for controlling the power converter in order to get at the output of the photovoltaic source a second voltage value upper than the first voltage value,
- means for obtaining a second current value provided by the photovoltaic source when the photovoltaic source provides the second voltage value,
- means for obtaining a threshold value from the first current value and the first voltage value,
- means for detecting a fault in at least one module of photovoltaic cells according to at least the second current value and the threshold value.

The present invention concerns also a method for determining if a fault exists in a photovoltaic source composed of plural modules of photovoltaic cells connected to a power converter, characterised in that the method comprises the steps of:

- controlling the power converter in order to get at the output of the photovoltaic source a first voltage value,
- obtaining a first current value provided by the photovoltaic source when the photovoltaic source provides the first voltage value,
- controlling the power converter in order to get at the output of the photovoltaic source a second voltage value upper than the first voltage value,
- obtaining a second current value provided by the photovoltaic source when the photovoltaic source provides the second voltage value,
- obtaining a threshold value from the first current value and the first voltage value,
- detecting a fault in at least one module of photovoltaic cells according to at least the second current value and the threshold value.

Thus, the presence of fault in a photovoltaic source can be determined without expensive sensors and in any environment condition of the photovoltaic source.

According to a particular feature, the means for obtaining the threshold value from the first current value and the first voltage value further comprise :

- means for checking if the threshold value is determined for the first current value and the first voltage value,
- means for determining the threshold value from the second current value if there is no determined threshold value for the first current value and the first voltage value.

Thus, the threshold value is obtained from past measurements realized on the photovoltaic source under supervision. The threshold value can be adapted to varying setup conditions of the photovoltaic source. Accuracy of the method is improved.

According to a particular feature, the apparatus comprises means for determining a maximum power point and means for determining the first voltage value as the maximum power point.

Thus, a better relation can be made with respect to environment conditions. Effectiveness of the method is improved.

According to a particular feature, the apparatus further comprises means for controlling the power converter in order to get at the output of the photovoltaic source plural voltage values and means for determining the electric power provided by the photovoltaic source at each of the plural voltage values and characterized in that the means for determining the maximum power point determine the maximum power point by selecting, among the plural voltage values, the voltage value for which the electric power provided by the photovoltaic source is the highest.

Thus, the accuracy of the determination of the maximum power point is increased and the effectiveness of the method is improved.

According to a particular feature, the second voltage value is determined as the first voltage value times a predetermined value.

Thus, the value for the second voltage is simply calculated, always available and adapted to the first voltage value.

According to a particular feature, the means for controlling the power converter in order to get at the output of the photovoltaic source the second voltage value modify the duty cycle of the switching of at least one switch comprised in the power converter.

Thus, there is no impact on the power converter hardware, the present invention can be implemented without any cost impact on the power converter.

According to a particular feature, the means for controlling the power converter in order to get at the output of the photovoltaic source the second voltage value reduce the current value provided by the power converter to a load and a capacitor is connected between the terminals of the photovoltaic source.

Thus, the current not fed to the load can be used to charge the capacitor connected between the terminals of the photovoltaic source and the output of the photovoltaic source will provide an increasing voltage value, until it reaches at least the desired second voltage value.

According to a particular feature, the current value provided by the power converter to the load is reduced to null value.

Thus, all the current provided by the photovoltaic source will be used to charge the capacitor connected between the terminals of the photovoltaic source. As a result, the capacitor voltage increases faster to the desired second voltage value.

As a result, energy production loss of photovoltaic source will be reduced.

According to a particular feature, the fault in at least one module of photovoltaic cells is detected if the second current value is higher than the threshold value.

Thus, it is possible to detect faults of photovoltaic systems which result in a modification of the shape of its current and voltage characteristics.

According to a particular feature, the apparatus comprises means for memorizing plural threshold values, each threshold value corresponding to a couple of voltage and current values provided by the photovoltaic source.

Thus, the method is robust to modification of shape of current and voltage characteristics of photovoltaic systems under varying environment conditions such as irradiation or temperature.

According to a particular feature, the means for determining the threshold value from the second current value if there is no determined threshold value for the first current value and the first voltage value further comprise :

- means for identifying a range of couple of voltage and current values corresponding to the first voltage value and first current value,
- means for incrementing a counter corresponding to the identified range,
- means for checking if the counter corresponding to the identified range is lower than a predetermined value,
- means for determining and storing an information related to the identified range from the second current value if the counter corresponding to the identified range is lower than the predetermined value,
- means for determining the threshold value from the stored information related to the identified range if the counter corresponding to the identified range equals the predetermined value.

Thus, provided that a sufficient predetermined value is used, the threshold value is determined with good reliability even in the events of measurement variations resulting from electromagnetic noise, fast variation of irradiation between first and second current measurements, or imprecision in determining the maximum power point. The Number of false detections of fault in the photovoltaic source is decreased.

According to a particular feature, information related to the identified range is the maximum value among second current value and previously stored information related to the identified range.

Thus, stored information is very compact and only contains the maximum observed value of second current value measured for the identified range.

The characteristics of the invention will emerge more clearly from a reading of the following description of an example embodiment, the said description being produced with reference to the accompanying drawings, among which :

Fig. 1a is an example of an energy conversion system wherein the present invention may be used according to a first embodiment of the present invention;
Fig. 1b is an example of an energy conversion system wherein the present invention may be used according to a second embodiment of the present invention;
Fig. 2a is an example of a photovoltaic source;
Fig. 2b is a detailed view of a first type of a module of photovoltaic cells of a photovoltaic source;
Fig. 2c is a detailed view of a second type of a module of photovoltaic cells of a photovoltaic source;

Fig. 3 represents an example of a power converter which may comprise means for implementing the present invention;

Fig. 4 represents an example of a centralizing device which implements the present invention according to the second embodiment of the present invention;

Fig. 5 represents an example of a power stage of a power converter which may comprise means for implementing the present invention according to a first mode of realization of the present invention;

Fig. 6 represents an example of realization of a DC/DC power converter comprised in the power stage of a power converter which implements the present invention according to the first mode of realization of the present invention ;

Fig. 7 is an example of an algorithm for determining if a fault exists in a photovoltaic system composed of plural modules of photovoltaic cells according to the first mode of realization of the present invention;

Fig. 8 is an example of ranges of couple of voltage and current values from the first voltage value and the first current value;

Fig. 9a is an example of a curve representing the output current variations of the photovoltaic source according to the output voltage of the photovoltaic source when no fault exists in the photovoltaic source at first environment conditions;

Fig. 9b is an example of a curve representing the output current variations of the photovoltaic source according to the output voltage of the photovoltaic source when at least one fault exists in the photovoltaic source at the first environment conditions;

Fig. 9c is an example of a curve representing the output current variations of the photovoltaic source according to the output voltage of the photovoltaic source when at least one fault exists in the photovoltaic source at the first environment conditions and of a curve representing the output current variations of the photovoltaic source according to the output voltage of the photovoltaic source when no fault exists in the photovoltaic source at second environment conditions.

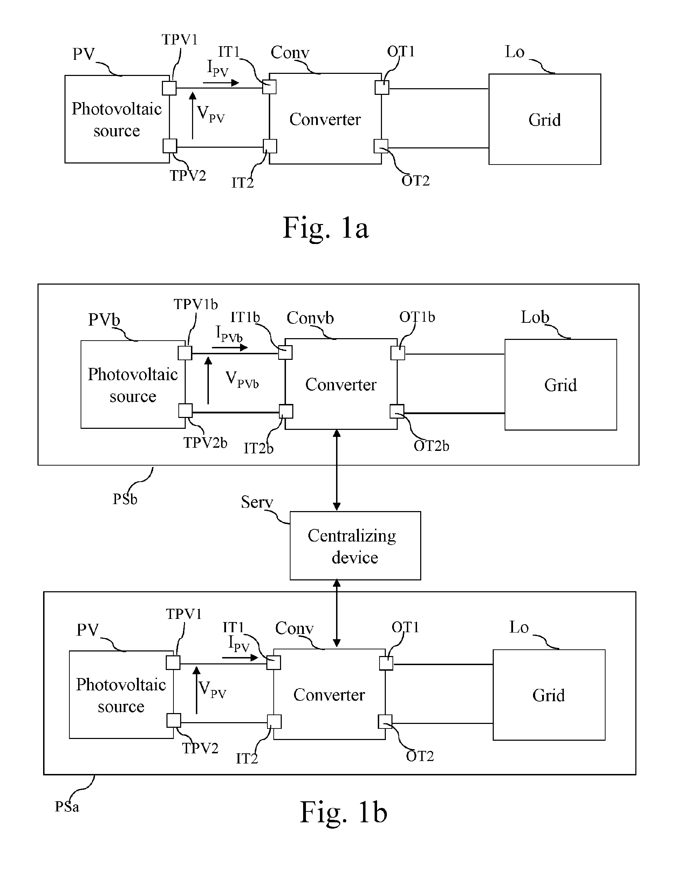

**Fig. 1a** is an example of an energy conversion system wherein the present invention may be used according to a first embodiment of the present invention.

The energy conversion system is composed of a photovoltaic source PV connected to a power converter Conv which output provides electrical energy to the load Lo.

According to the first embodiment, the power converter Conv may comprise means for determining if a fault exists in a photovoltaic system composed of plural modules of photovoltaic cells according to the present invention.

The load Lo is for example the electric power network named usually a grid. The load Lo may be also a battery.

The photovoltaic source PV provides current intended to the load Lo. The current is converted by the power converter Conv prior to be provided to the load Lo.

A first terminal TPV1 of the photovoltaic source PV is connected to a first input terminal IT1 of the power converter Conv.

A second terminal TPV2 of the photovoltaic source PV is connected to a second input terminal IT2 of the power converter Conv.

A first output terminal OT1 of the power converter Conv is connected to a first terminal of the load Lo.

A second output terminal OT2 of the power converter Conv is connected to a second terminal of the load Lo.

In Fig. 1a, only two output terminals are shown. The present invention is also applicable when a higher number of output terminals exists e.g. in the case of connection to a three-phase grid.

**Fig. 1b** is an example of an energy conversion system wherein the present invention may be used according to a second embodiment of the present invention.

According to the second embodiment of the present invention, a centralizing device Serv comprises means for determining if a fault exists in plural photovoltaic systems composed of plural modules of photovoltaic cells according to the present invention.

The centralizing device Serv is connected to plural photovoltaic systems and is able to determine, if a fault exists in plural photovoltaic sources PV according to measurements performed by the power converters Conv and Convb connected to respective photovoltaic sources PV and PVb. Measurements are transferred by the power converters Conv and Convb through a telecommunication network not shown in Fig. 1 to the centralizing device Serv.

Only two photovoltaic systems are shown in Fig. 1b for the sake of simplicity, but the centralizing device Serv is linked, in reality to a more important number of photovoltaic systems.

The energy conversion system PSa is composed of a photovoltaic source PV connected to a power converter Conv which output provides electrical energy to the load Lo.

The load Lo is for example the electric power network named usually a grid. The load Lo may be also a battery.

The photovoltaic source PV provides current intended to the load Lo. The current is converted by the power converter Conv prior to be used by the load Lo.

A first terminal TPV1 of the photovoltaic source PV is connected to a first input terminal IT1 of the power converter Conv.

A second terminal TPV2 of the photovoltaic source PV is connected to a second input terminal IT2 of the power converter Conv.

A first output terminal OT1 of the power converter Conv is connected to a first terminal of the load Lo.

A second output terminal OT2 of the power converter Conv is connected to a second terminal of the load Lo.

The energy conversion system PSb is composed of a photovoltaic source PVb connected to a power converter Convb which output provides electrical energy to the load Lob.

The load Lob is for example the electric power network named usually a grid. The load Lob may be also a battery.

The photovoltaic source PVb provides current intended to the load Lob. The current is converted by the power converter Convb prior to be used by the load Lob.

A first terminal TPV1b of the photovoltaic source PVb is connected to a first input terminal IT1b of the power converter Convb.

A second terminal TPV2b of the photovoltaic source PVb is connected to a second input terminal IT2b of the power converter Convb.

A first output terminal OT1b of the power converter Convb is connected to a first terminal of the load Lob.

A second output terminal OT2b of the power converter Convb is connected to a second terminal of the load Lob.

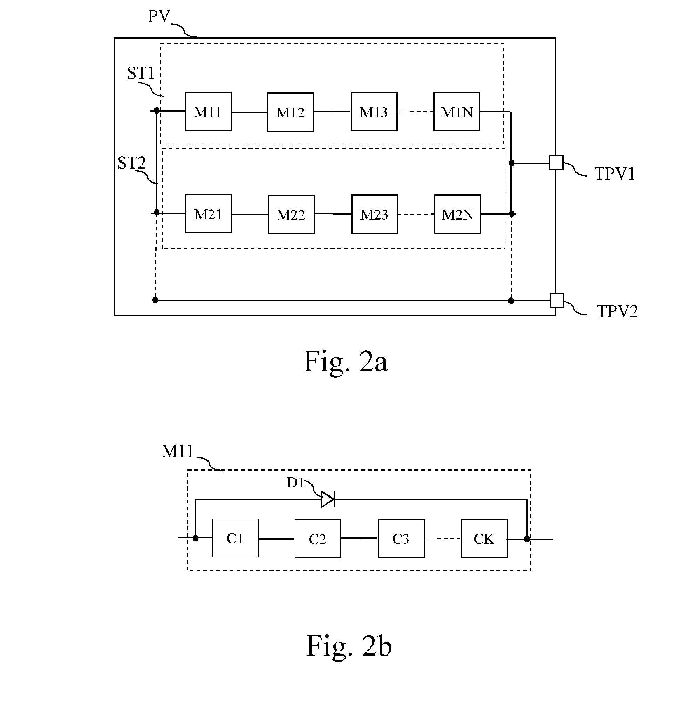

**Fig. 2a** is an example of a photovoltaic source.

The photovoltaic source PV is composed of plural strings of modules of photovoltaic cells which are connected in parallel to the output terminals TPV1 and TPV2.

A first string of modules of photovoltaic cells ST1 is composed of the modules of photovoltaic cells M11, M12, M13 and M1N.

The modules of photovoltaic cells M11, M12, M13 and M1N are connected each other in series.

A second string of modules of photovoltaic cells ST2 is composed of the modules of photovoltaic cells M21, M22, M23 and M2N.

The modules of photovoltaic cells M21, M22, M23 and M2N are connected each other in series.

It has to be noted here that the photovoltaic source PV may be composed of a single string of photovoltaic modules.

**Fig. 2b** is a detailed view of a first type of module of photovoltaic cells of a photovoltaic source.

The module shown in Fig. 2b is for example the module of photovoltaic cells M11 of Fig. 2a.

The module of photovoltaic cells M11 is composed of the photovoltaic cells C1, C2, C3 to CK. The module of photovoltaic cells M11 comprises also a bypass diode D1 connected in parallel with the photovoltaic cells C1, C2, C3 to CK.

Bypass diode D1 prevents the voltage of module of photovoltaic cells from becoming negative in high input current conditions.

When input current exceeds the short-circuit current of the weakest photovoltaic cell of the photovoltaic cells C1, C2, C3 to CK, excess current then flows through bypass diode D1 instead of passing through the photovoltaic cells C1, C2, C3 to CK.

Bypass diode D1 is effective and prevents presence of hot spots when the number of damaged cells increases so as to lead to negative voltage of the module of photovoltaic cells.

The other modules of photovoltaic cells have the same architecture of the module of photovoltaic cells M11.

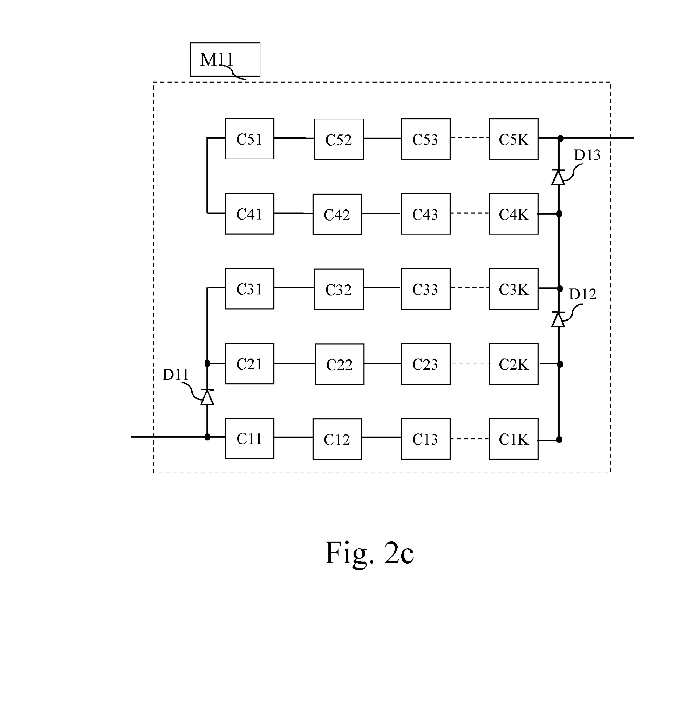

**Fig 2c** is a detailed view of a second type of module of photovoltaic cells of a photovoltaic source.

The module shown in Fig. 2c is for example the module of photovoltaic cells M11 of Fig. 2a.

The module of photovoltaic cells M11 is composed of the photovoltaic cells C11 to C1K, C21 to C2K, C31 to C3K, C41 to C4K and C51 to C5K and of diodes D11, D12 and D13.

The configuration of photovoltaic cells and of diodes is named interleaved diodes configuration.

A first terminal of the photovoltaic cell C 11 is connected to a first terminal of the module of photovoltaic cells M11.

The photovoltaic cells C11, C12, C13 to C1K are connected in series.

The first terminal of the photovoltaic cell C 11 is connected to the anode of the diode D11.

The cathode of the diode D11 is connected to a terminal of the photovoltaic cell C21 and to a terminal of the photovoltaic cell C31.

The photovoltaic cells C21, C22, C23 to C2K are connected in series.

A terminal of the photovoltaic cell C1K is connected to a terminal of the photovoltaic cell C2K and to the anode of the diode D12.

The photovoltaic cells C31, C32, C33 to C3K are connected in series.

The cathode of the diode D12 is connected to a terminal of the photovoltaic cell C3K, to a terminal of the photovoltaic cell C4K and to the anode of the diode D13.

The photovoltaic cells C4K to C43, C42 to C41, C51, C52, C53 to C5K are connected in series.

A terminal of the photovoltaic cell C5K is connected to the cathode of the diode D13 and to the second terminal of the module M11.

When no fault exists in the module M11, current flows through photovoltaic cells C11, C12, C13 to C14, C2K to C23, C22, C21, C31, C32, C33 to C3K, C4K to C43, C42, C41, C51, C52 C53, C5K.

Bypass diodes D11, D12, D13 prevent the voltage of the module M11 of photovoltaic cells from becoming negative in high input current conditions.

For example, if the cell C12 has a fault, when input current exceeds the short-circuit current of the weakest photovoltaic cell C12, excess current then flows through bypass diode D11 instead of passing through the photovoltaic cells C11, C12, C13 to C1K, C2K to C23, C22 and C21.

Bypass diodes are effective and prevent presence of hot spots when the number of damaged cells increases so as to lead to negative voltage of the module of photovoltaic cells M11.

The other modules of photovoltaic cells have the same architecture of the module of photovoltaic cells M11.

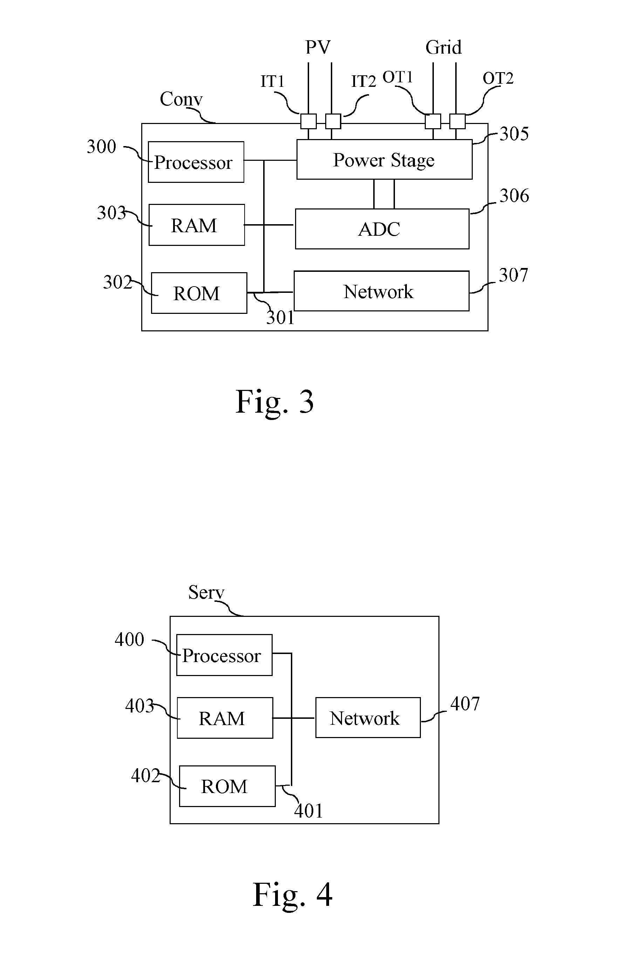

**Fig. 3** represents an example of a power converter which may comprise means for implementing the present invention.

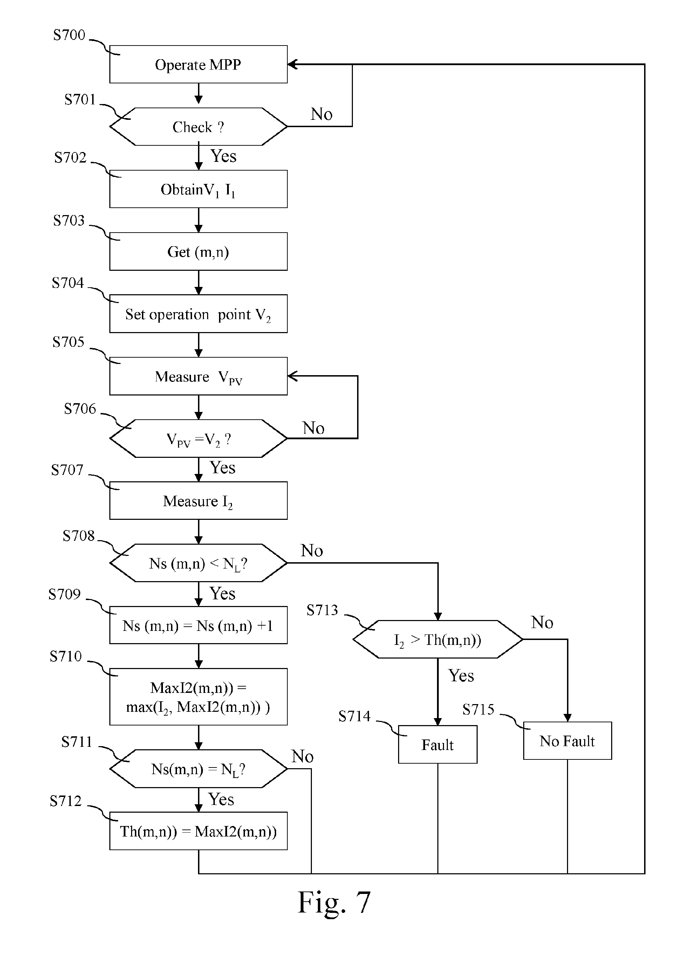

The power converter Conv has, for example, an architecture based on components connected together by a bus 301 and a processor 300 controlled by the program related to the algorithm as disclosed in the Fig. 7.

It has to be noted here that the power converter Conv is, in a variant, implemented under the form of one or several dedicated integrated circuits which execute the same operations as the one executed by the processor 300 as disclosed hereinafter.

The bus 301 links the processor 300 to a read only memory ROM 302, a random access memory RAM 303, an analogue to digital converter ADC 306 and a power stage 305.

The read only memory ROM 302 contains instructions of the program related to the algorithm as disclosed in the Fig. 7 which are transferred, when the power converter Conv is powered on to the random access memory RAM 303.

The RAM memory 303 contains registers intended to receive variables, and the instructions of the program related to the algorithm as disclosed in the Fig. 7.

The analogue to digital converter 306 is connected to the power stage 305 and converts into binary data the voltage $V_{PV}$ and/or the current $I_{PV}$ sensed by the power stage 305 and provided by the photovoltaic source PV.

The power stage 305 is a DC-DC step-down/step-up power converter and/or a DC/AC power converter also named inverter, which output provides electrical energy to the load Lo.

The input terminals IT1 and IT2 of the power stage 305 are connected to the terminals TPV1 and TPV2 of the photovoltaic source PV.

Under the control of processor 300, the voltage provided by the photovoltaic source PV is modified using variable duty cycles of command signals of switches not shown in Fig. 3 of the power stage 305. Command signals are provided by the processor 300.

In normal operation mode, the power stage 305 converts the input power provided by the photovoltaic source PV into output power provided to the load Lo.

The power converter Conv comprises means for determining the maximum power point of the photovoltaic source PV. The maximum power point is determined as the voltage of the photovoltaic source PV at which the photovoltaic source PV provides the highest level of power to the power converter Conv.

The power stage 305 comprises a current sensor for sensing the current $I_{PV}$ provided by the photovoltaic source PV and may comprise a voltage sensor for sensing the voltage provided by the photovoltaic source PV.

It has to be noted here that the current outputted by the power converter Conv may be sensed instead of the current provided by the photovoltaic source PV as the current provided by the photovoltaic source PV may be derived from the current outputted by the power converter Conv.

The voltage outputted by the power converter Conv may be sensed instead of the voltage provided by the photovoltaic source PV as the voltage provided by the photovoltaic source PV may be derived from the voltage outputted by the power converter Conv.

According to the second embodiment of the present invention, the power converter Conv comprises a network interface 307 through which data are transferred to and received from the centralizing device Serv.

**Fig. 4** represents an example of a centralizing device which implements the present invention according to the second embodiment of the present invention.

The centralizing device Serv has, for example, an architecture based on components connected together by a bus 401 and a processor 400 controlled by the program related to the algorithm as disclosed in the Fig. 7.

It has to be noted here that the centralizing device Serv is, in a variant, implemented under the form of one or several dedicated integrated circuits which execute the same operations as the one executed by the processor 400 as disclosed hereinafter.

The bus 401 links the processor 400 to a read only memory ROM 402, a random access memory RAM 403 and a network interface 407.

The read only memory ROM 402 contains instructions of the program related to the algorithm as disclosed in the Fig. 7 which are transferred, when the centralizing device Serv is powered on to the random access memory RAM 403.

The centralizing device Serv comprises a network interface 407 through which data are transferred to and received from the power converters Conv and Convb which are linked to the centralizing device Serv.

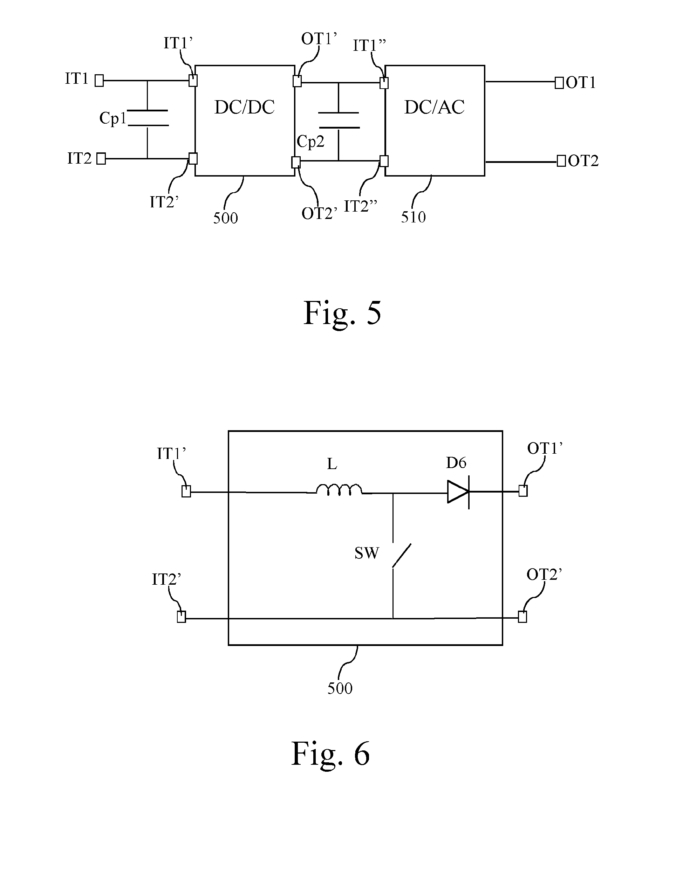

**Fig. 5** represents an example of a power stage of a power converter which may comprise means for implementing the present invention according to a first mode of realization of the present invention.

The power stage 305 is composed of a DC/DC power converter 500, a DC/AC power converter 510, a capacitor Cp1 and a capacitor Cp2.

A first terminal of the capacitor Cp1 is connected to the first input terminal IT1 of the power converter Conv and to a first input terminal IT1' of the DC/DC power converter 500.

A second terminal of the capacitor Cp1 is connected to the second input terminal IT2 of the power converter Conv and to a second input terminal IT2' of the DC/DC power converter 500.

A first output terminal OT1' of the DC/DC power converter 500 is connected to a first terminal of the capacitor Cp2 and to a first input terminal IT1" of the DC/AC power converter 510.

A second output terminal OT1' of the DC/DC power converter 500 is connected to a second terminal of a capacitor Cp2 and to a first input terminal IT1" of the DC/AC power converter 510.

The outputs terminals of the DC/AC power converter 510 are the outputs terminals OT1 and OT2 of the power stage 305.

**Fig. 6** represents an example of realization of a DC/DC power converter comprised in the power stage of a power converter according to the first mode of realization of the present invention.

The DC/DC power converter 500 is composed of at least one inductor L, one diode D6 and one switch SW.

A first terminal of the inductor L is connected to the first input terminal IT1' of the DC/DC power converter 500.

A second terminal of the inductor L is connected to the anode of the diode D6 and to a first terminal of the switch SW.

The cathode of the diode D6 is connected to the first output terminal OT1' of the DC/DC power converter 500.

The second terminal of the switch SW is connected to the second input terminal IT2' of the DC/DC power converter 500 and to the second output terminal OT2' of the DC/DC power converter 500.

**Fig. 7** is an example of a first algorithm for determining if a fault exists in a photovoltaic system composed of plural modules of photovoltaic cells according to the first mode of realization of the present invention.

The present algorithm will be disclosed when it is executed by the processor 300 of the power converter Conv. The present algorithm may be also executed by the processor 400 of the centralizing device Serv instead of being executed by the processor 300 of the power converter Conv.

At step S700, the power converter Conv provides energy to the load Lo.

In that operation mode, the power converter Conv operates the photovoltaic source PV at an optimal point at which the photovoltaic source PV provides the greatest power. This point is denominated as the Maximum Power Point (MPP).

To that end, the processor 300 uses a maximum power point tracking algorithm so as to track the MPP variations resulting from varying environment conditions.

At next step S701, the processor 300 checks if it is time to check if a fault exists in at least one module of photovoltaic cells.

For example, periodically, every minute, or every hour, or every day or every week, the processor 300 checks if a fault exists in at least one module of photovoltaic cells.

For example, the processor 300 checks if a fault exists in at least one module of photovoltaic cells when the centralizing device Serv transfers a message requesting it to trigger the check.

As far as it is not time to check if a fault exists in at least one module of photovoltaic cells, the processor 300 operates the photovoltaic source PV at an optimal point at which the photovoltaic source PV provides the greatest power.

If it is time to check if a fault exists in at least one module of photovoltaic cells, the processor 300 moves to step S702.

A step S702, the processor 300 obtains a first voltage value $V_1$ and a first current value $I_1$.

The first voltage value $V_1$ is for example the last voltage value at the output of the photovoltaic source during the maximum power point tracking algorithm.

The first voltage value $V_1$ is for example determined from plural voltage values at the output of the photovoltaic source PV during the maximum power point tracking algorithm. The first voltage value $V_1$ may be the mean of the voltage values at the output of the photovoltaic source PV during the maximum power point tracking algorithm.

The first voltage value $V_1$ is for example determined by controlling the power converter Conv in order to get at the output of the photovoltaic source PV plural voltage values, by determining the electric power provided by the photovoltaic source PV at each of the plural voltage values and by selecting the voltage value for which the electric power provided by the photovoltaic source PV is the highest.

It has to be noted here that the processor 300 determines the first voltage value $V_1$ or may transfer the voltage values and current values to the centralizing device Serv and receives in response the first voltage values $V_1$ determined by the centralizing device Serv.

The first current value $I_1$ is for example measured when the photovoltaic source PV provides the voltage value $V_1$ or may be deduced from the voltage value $V_1$ and from the capacitor Cp1 value.

At new step S703, the processor 300 selects a range of couple of voltage and current values.

The range of couple of voltage and current values comprises the first voltage value $V_1$ and the first current value $I_1$.

As example, the range of couple of voltage and current values is determined as matrix coordinates m and n.

At new step S704, the processor 300 controls the power stage 305 in order to set the voltage provided by the power source PV at a second value $V_2$ which is derived from the first voltage value $V_1$.

For example, $V_2 = V_1(1+x)$ where x is a predetermined value.

For example, x is a value comprised between 0.1 and plus 0.3.

According to a particular mode of realization of the present invention, x=0.22.

It has to be noted here that the processor 300 determines the second voltage value $V_2$ or may transfer the first voltage value $V_1$ to the centralizing device Serv and receives in response the second voltage values $V_2$ calculated by the centralizing device Serv.

For example, the processor 300 modifies the duty cycle of the switching of at least one switch comprised in the power converter Conv.

For example, the processor 300 controls the power converter Conv in order to get at the output of the photovoltaic source PV the second voltage value $V_2$ by reducing the current value provided by the power converter Conv.

For example, the processor 300 controls the switch SW in order to interrupt the providing of current to the load Lo. In that case, the capacitor Cp1 is charged by the current provided by the photovoltaic source PV up to the second voltage value $V_2$ or up to the open circuit voltage value of the photovoltaic source PV.

At step S705, the processor 300 measures the voltage value $V_{PV}$ of the photovoltaic source PV during the charge of the capacitor Cp1.

More precisely, the processor 300 controls the analogue to digital converter 306 in order to take at least one sample of the voltage outputted by the photovoltaic source PV.

At step S706, the processor 300 checks if the voltage provided by the photovoltaic source PV is equal to the second voltage value $V_2$.

If the voltage provided by the photovoltaic source PV is equal to the second voltage value $V_2$, the processor 300 moves to step S707. Otherwise, the processor 300 executes again the step S705.

At next step S707, the processor 300 controls the analogue to digital converter 306 in order to take at least one sample of the current $I_2$ outputted by the photovoltaic source PV when the photovoltaic source PV provides the voltage value $V_2$.

At next step S708, the processor 300 identifies a counter $N_s(m,n)$ which is associated to the range of couple of voltage and current values selected at step S703 and compares its value with a predetermined value $N_L$.

$N_s(m,n)$ is the number of times the coordinate (m, n) of the matrix has been selected at step S703 since the start of the present algorithm.

$N_L$ is the minimum value of number of measurement samples $N_s(m,n)$ required to compute the threshold value $Th(m, n)$ before switching to fault detection mode for the range of couple of voltage and current values selected at step S703.

If $N_s(m,n)$ is lower than $N_L$, the processor 300 moves to step S709. Otherwise, the processor 300 moves to step S713.

The steps S709 to S712 correspond to threshold value determination mode.

At step S709, the processor 300 increments the counter $N_s(m,n)$ which corresponds to the range of couple of voltage and current values selected at step S703.

At next step S710, the processor 300 determines information related to the range of couple of voltage and current values selected at step S703 and stores information related to the range of couple of voltage and current values determined at step S703 in the memory 303.

For example, the processor 300 updates the content of cell (m,n) of a matrix noted MaxI2. For example, MaxI2(m,n) is set to the maximum value between the second current value $I_2$ and previous value of MaxI2 (m,n) read from memory 303.

At step S711, the processor 300 checks if the counter $N_s(m,n)$ which corresponds to the range of couple of voltage and current values selected at step S703 is equal to the value $N_L$.

If the counter $N_s(m,n)$ which corresponds to the range of couple of voltage and current values selected at step S703 is equal to the value $N_L$, the processor 300 moves to the step S712. Otherwise, the processor 300 resumes the operation of the photovoltaic source PV at the operation point used at step S700 of the present algorithm.

At step S712, the processor 300 computes the threshold value $Th(m,n)$ for the range of couple of voltage and current values selected at step S703.

For example, the threshold value $Th(m,n)$ is set to the content of cell (m,n) of the matrix MaxI2 corresponding to the maximum value of second current values $I_2$ obtained from the start of the process for the range of couple of voltage and current values determined at step S703.

After that, the processor 300 resumes the operation of the photovoltaic source PV at the operation point used at step S700 of the present algorithm.

The steps S713 to S715 correspond to a fault detection mode.

At step S713, the processor 300 compares the second current value $I_2$ to the threshold value $Th(m,n)$ which corresponds to the range of couple of voltage and current values selected at step S703.

If the second current value $I_2$ is upper than the threshold value $Th(m,n)$ which corresponds to the range of couple of voltage and current values selected at step S703, the processor 300 moves to step S714. Otherwise, the processor 300 moves to step S715.

At step S714, a fault is detected. For example, an information is displayed in order to clean the photovoltaic source PV.

For example, a message is displayed in order to call a maintenance service in order to replace one module of photovoltaic cells of the photovoltaic source PV.

It has to be noted here that the processor 300 may transfer through network interface 307 the second current value $I_2$ to the centralizing device Serv which determines if a fault exists in the photovoltaic source PV.

After that, the present algorithm is interrupted, and the power converter Conv resumes the operation of the photovoltaic source PV at the operation point used at step S700 of the present algorithm.

At step S715, no fault is detected, the present algorithm is interrupted and the processor 300 resumes the operation of the photovoltaic source PV at the operation point used at step S700 of the present algorithm.

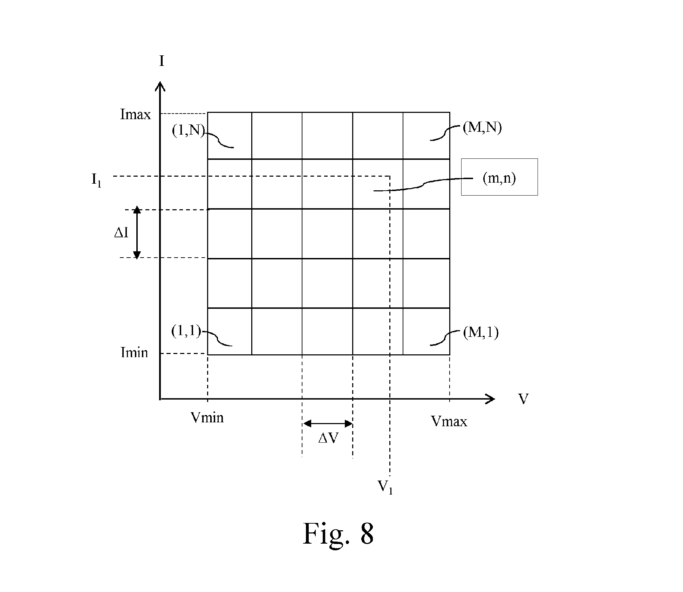

**Fig. 8** is an example of ranges of couple of voltage and current values from the first voltage value and the first current value.

The Fig. 8 shows ranges of couple of voltage and current values organized into a matrix form named MaxI2.

The cells (m,n) with m=1 to M and n=1 to N of the matrix MaxI2 comprise the maximum value of second current values $I_2$ obtained from the start of the process for the range of couple of voltage and current values (m, n).

When Ns(m,n) is equal to $N_L$, the cell (m,n) comprises the threshold value Th(m,n).

The matrix MaxI2 has a size of M*N, where M and N are predetermined values, for example equal to fifty.

The range of couple of voltage and current values is determined by the processor 300 as matrix coordinates m,n which verifies :

m is the integer part of $(V_1 - V_{min}) / \Delta V$
n is the integer part of $(I_1 - I_{min}) / \Delta I$
where $\Delta V$ is a predetermined voltage step, $\Delta I$ is a predetermined current step.

For example, the voltage and current step $\Delta V$ and $\Delta I$ are set as

$$\Delta V = (V_{max} - V_{min}) / M$$

$$\Delta I = (I_{max} - I_{min}) / N$$

$V_{min}$ is the minimum voltage value of the first voltage value $V_1$. For example $V_{min}$ is the minimum value of the input voltage range of the power converter Conv.
$V_{max}$ is the maximum voltage value of the first voltage value $V_1$. For example $V_{max}$ is the maximum value of the input voltage range of the power converter Conv.
$I_{min}$ is the minimum current value of the first current value $I_1$. For example $I_{min}$ is equal to null value.
$I_{max}$ is the maximum current value that the first current value $I_1$ can take. For example $I_{max}$ is the maximum value of the input current range of the power converter Conv.

It has to be noted here that the counters Ns(m,n) with m=1 to M and n=1 to N are also organized into a matrix form of size M*N.

The processor 300 selects a range of couple of voltage and current values at step S703 by selecting the cell in which the first current and voltage values measured at step S702 are comprised in.

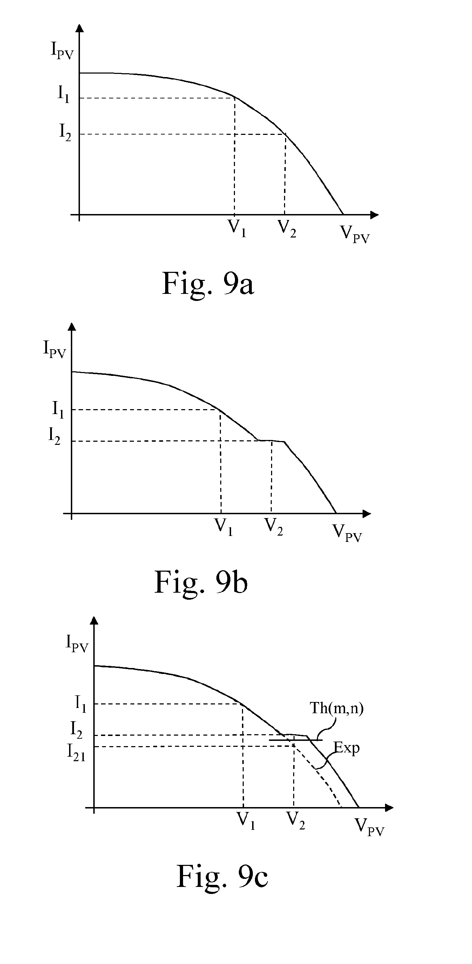

**Fig. 9a** is an example of a curve representing the output current variations of the photovoltaic source according to the output voltage of the photovoltaic source when no fault exists in the photovoltaic source at first environment conditions.

On the horizontal axis of Fig. 9a, voltage values are shown. The voltage values are comprised between null value and the open circuit voltage $V_{OC}$.

On the vertical axis of Fig. 9a, current values are shown. The current values are comprised between null value and the short circuit current $I_{SC}$.

At any given light level and photovoltaic array temperature there is an infinite number of current-voltage pairs, or operating points, at which the photovoltaic array can operate.

The voltage values $V_1$ and $V_2$ and corresponding current values $I_1$ and $I_2$ are shown.

The second current value $I_2$ is not upper than the threshold value Th(m,n), no fault exists in the photovoltaic source PV.

**Fig. 9b** is an example of a curve representing the output current variations of the photovoltaic source according to the output voltage of the photovoltaic source when at least one fault exists in the photovoltaic source at first environment conditions.

On the horizontal axis of Fig. 9b, voltage values are shown. The voltage values are comprised between null value and the open circuit voltage $V_{OC}$.

On the vertical axis of Fig. 9b, current values are shown. The current values are comprised between null value and the short circuit current $I_{SC}$.

At any given light level and photovoltaic array temperature there is an infinite number of current-voltage pairs, or operating points, at which the photovoltaic array can operate.

The voltage values $V_1$ and $V_2$ and corresponding current values $I_1$ and $I_2$ are shown.

The voltage values $V_1$ and $V_2$ are different from the one shown in Fig. 9a as the maximum power point is modified when a fault occurs in the photovoltaic source PV.

The shape of the curve shown in Fig. 9b is typically obtained when a fault exists in the photovoltaic source PV.

**Fig. 9c** is an example of a curve representing the output current variations of the photovoltaic source according to the output voltage of the photovoltaic source when at least one fault exists in the photovoltaic source at the first environment conditions and of a curve representing the output current variations of the photovoltaic source according to the output voltage of the photovoltaic source when no fault exists in the photovoltaic source at second environment conditions.

On the horizontal axis of Fig. 9c, voltage values are shown. The voltage values are comprised between null value and the open circuit voltage $V_{OC}$.

On the vertical axis of Fig. 9c, current values are shown. The current values are comprised between null value and the short circuit current $I_{SC}$.

The voltage values $V_1$ and $V_2$ and corresponding current values $I_1$ and $I_2$ are shown.

The voltage values $V_1$ and $V_2$ and the current level $I_1$ are same as the ones shown in Fig. 9a, as effect of modification of maximum power point when a fault occurs in the photovoltaic source PV is compensated by the different first and second environment conditions.

The second current value $I_2$ is upper than the threshold value Th(m,n), at least one fault exists in the photovoltaic source PV.

The current values $I_1$ and $I_{21}$ correspond to current values that will be obtained in second environment conditions. The shape of the curve of the doted curve noted Exp corresponds to a behaviour of the photovoltaic source PV which has no fault and which operates in second environment conditions.

The second current value $I_{21}$ is not upper than the threshold value T, no fault exists in the photovoltaic source PV.

Naturally, many modifications can be made to the embodiments of the invention described above without departing from the scope of the present invention.

**Claims**

1. Apparatus for determining if a fault exists in a photovoltaic source composed of plural modules of photovoltaic cells connected to a power converter, **characterised in that** the apparatus comprises:

    - means for controlling the power converter in order to get at the output of the photovoltaic source a first voltage value,
    - means for obtaining a first current value provided by the photovoltaic source when the photovoltaic source provides the first voltage value,
    - means for controlling the power converter in order to get at the output of the photovoltaic source a second voltage value upper than the first voltage value,
    - means for obtaining a second current value provided by the photovoltaic source when the photovoltaic source provides the second voltage value,
    - means for obtaining a threshold value from the first current value and the first voltage value,
    - means for detecting a fault in at least one module of photovoltaic cells according to at least the second current value and the threshold value.

2. Apparatus according to claim 1, **characterised in that** the means for obtaining the threshold value from the first current value and the first voltage value further comprise :

    - means for checking if the threshold value is determined for the first current value and the first voltage value,
    - means for determining the threshold value from the second current value if there is no determined threshold value for the first voltage value and the first current value.

3. Apparatus according to claim 1, **characterised in that** the apparatus comprises means for determining a maximum power point and means for determining the first voltage value as the determined maximum power point.

4. Apparatus according to the claims 1 and 2, **characterised in that** the apparatus further comprises means for controlling the power converter in order to get at the output of the photovoltaic source plural voltage values and means for determining the electric power provided by the photovoltaic source at each of the plural voltage values and **in that** the means for determining the maximum power point determine the maximum power point by selecting, among the plural voltage values, the voltage value for which the electric power provided by the photovoltaic source is the highest.

5. Apparatus according to claims 1 and 3, **characterised in that** the second voltage value is determined as the first voltage value times a predetermined value.

6. Apparatus according to any of the claims 1 to 5, **characterised in that** the means for controlling the power converter in order to get at the output of the photovoltaic source the second voltage value modify the duty cycle of the switching of at least one switch comprised in the power converter.

7. Apparatus according to any of the claims 1 to 5, **characterised in that** the means for controlling the power converter in order to get at the output of the photovoltaic source the second voltage value reduce the current value provided by the power converter to a load and **in that** a capacitor is connected between the terminals of the photovoltaic source.

8. Apparatus according to claim 7, **characterised in that** the current value provided by the power converter to the load is reduced to null value.

9. Apparatus according to any of the claims 1 to 8, **characterised in that** the fault in at least one module of photovoltaic cells is detected if second current value is higher than the threshold value.

10. Apparatus according to any of the claims 1 to 9, **characterised in that** the apparatus comprises means for memorizing plural threshold values, each threshold value corresponding to a range of couples of voltage and current values provided by the photovoltaic source.

11. Apparatus according to claim 2, **characterised in that** the means for determining the threshold value from second current value if there is no determined threshold value for the first voltage value and the first current value further comprise :

    - means for identifying a range of couple of voltage and current values corresponding to the first voltage value and first current value,
    - means for incrementing a counter corresponding to the identified range,
    - means for checking if the counter corresponding to the identified range is lower than a predetermined value,
    - means for determining and storing an information related to the identified range from the second current value if the counter corresponding to the identified range is lower than the predetermined value,
    - means for determining the threshold value from the stored information related to the identified range if the counter corresponding to the identified range equals the predetermined value.

12. Apparatus according to claim 11, **characterised in that** information related to the identified range is the maximum value among second current value and previously stored information related to the identified range.

13. Method for determining if a fault exists in a photovoltaic source composed of plural modules of photovoltaic cells connected to a power converter, **characterised in that** the method comprises the steps of:

    - controlling the power converter in order to get at the output of the photovoltaic source a first voltage value,
    - obtaining a first current value provided by the photovoltaic source when the photovoltaic source provides the first voltage value,
    - controlling the power converter in order to get at the output of the photovoltaic source a second voltage value upper than the first voltage value,
    - obtaining a second current value provided by the photovoltaic source when the photovoltaic source provides the second voltage value,
    - obtaining a threshold value from the first current value and the first voltage value,
    - detecting a fault in at least one module of photovoltaic cells according to at least the second current value and the threshold value.

Fig. 1a

Fig. 1b

PV

ST1

M11 — M12 — M13 ----- M1N

ST2

M21 — M22 — M23 ----- M2N

TPV1

TPV2

## Fig. 2a

M11

D1

C1 — C2 — C3 ----- CK

## Fig. 2b

Fig. 2c

Fig. 3

Fig. 4

IT1'   OT1'  IT1"

IT1 ▫ ──────┬──── ▫ ┌─────────┐ ▫ ──────┬──── ▫ ┌─────────┐ ────── ▫ OT1
            │       │         │          │       │         │
         Cp1 ═╪═     │  DC/DC  │       Cp2 ═╪═     │  DC/AC  │
            │       │         │          │       │         │
IT2 ▫ ──────┴──── ▫ └─────────┘ ▫ ──────┴──── ▫ └─────────┘ ────── ▫ OT2

IT2'        500     OT2'  IT2"    510

## Fig. 5

IT1' ────── ▫ ┌──────── L ────── D6 ──────┐ ▫ ────── OT1'
             │        ─mmm─      ─▷|─     │
             │                  SW  │     │
             │                   /  │     │
IT2' ────── ▫ │                   └──┘     │ ▫ ────── OT2'
             └────────────────────────────┘
                          500

## Fig. 6

S700 — **Operate MPP**

S701 — **Check ?** — No

↓ Yes

S702 — **Obtain $V_1$ $I_1$**

S703 — **Get (m,n)**

S704 — **Set operation point $V_2$**

S705 — **Measure $V_{PV}$**

S706 — **$V_{PV} = V_2$ ?** — No

↓ Yes

S707 — **Measure $I_2$**

S708 — **Ns (m,n) < $N_L$?** — No

↓ Yes

S709 — **Ns (m,n) = Ns (m,n) +1**

S710 — **MaxI2(m,n)) = max($I_2$, MaxI2(m,n)) )**

S711 — **Ns(m,n) = $N_L$?** — No

↓ Yes

S712 — **Th(m,n)) = MaxI2(m,n))**

S713 — **$I_2$ > Th(m,n))** — No

↓ Yes

S714 — **Fault**

S715 — **No Fault**

Fig. 7

Fig. 8

Fig. 9a

Fig. 9b

Fig. 9c

**EP 2 594 951 A1**

| | Europäisches Patentamt European Patent Office Office européen des brevets | **EUROPEAN SEARCH REPORT** | Application Number EP 11 18 9934 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 403 649 A2 (SIEMENS AG [DE]) 31 March 2004 (2004-03-31) * abstract; figures 2-5 * * paragraph [0031] - paragraph [0051] * | 1-13 | INV. G01R31/40 |
| X | JP 2008 091807 A (NAT INST OF ADV IND & TECHNOL) 17 April 2008 (2008-04-17) * abstract; figures 1-4 * | 1-13 | |
| X | WO 2011/089999 A1 (OMRON TATEISI ELECTRONICS CO [JP]; NAT INST OF ADVANCED IND SCIEN [JP]) 28 July 2011 (2011-07-28) * abstract; figures 1-5 * | 1-13 | |
| A | EP 2 019 433 A1 (EKO INSTRUMENTS TRADING [JP]) 28 January 2009 (2009-01-28) * abstract; figures 4,6,7 * * paragraphs [0034], [0045] * | 1-13 | |
| A | SYAFARUDDIN ET AL: "Controlling of artificial neural network for fault diagnosis of photovoltaic array", INTELLIGENT SYSTEM APPLICATION TO POWER SYSTEMS (ISAP), 2011 16TH INTERNATIONAL CONFERENCE ON, IEEE, 25 September 2011 (2011-09-25), pages 1-6, XP032011065, DOI: 10.1109/ISAP.2011.6082219 ISBN: 978-1-4577-0807-7 * figures 1,2 * | 1-13 | TECHNICAL FIELDS SEARCHED (IPC) G01R G05F H01L |
| A | AT 508 834 A1 (FRONIUS INT GMBH [AT]) 15 April 2011 (2011-04-15) * abstract; figures 2-7 * * page 1, paragraph 1 - page 9, last paragraph * | 1-13 | |

-/--

The present search report has been drawn up for all claims

| Place of search | Date of completion of the search | Examiner |
|---|---|---|
| Berlin | 27 April 2012 | Ernst, Monika |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 11 18 9934

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JP 2003 121490 A (CANON KK) 23 April 2003 (2003-04-23) * abstract; figures 7-11 * ----- | 1-13 | |
| | | | TECHNICAL FIELDS SEARCHED (IPC) |

The present search report has been drawn up for all claims

| Place of search | Date of completion of the search | Examiner |
|---|---|---|
| Berlin | 27 April 2012 | Ernst, Monika |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 2 594 951 A1**

## ANNEX TO THE EUROPEAN SEARCH REPORT
## ON EUROPEAN PATENT APPLICATION NO.

EP 11 18 9934

This annex lists the patent family members relating to the patent documents cited in the above-mentioned European search report.
The members are as contained in the European Patent Office EDP file on
The European Patent Office is in no way liable for these particulars which are merely given for the purpose of information.

27-04-2012

| Patent document cited in search report | | Publication date | Patent family member(s) | | | Publication date |
|---|---|---|---|---|---|---|
| EP 1403649 | A2 | 31-03-2004 | AT | 347110 | T | 15-12-2006 |
| | | | EP | 1403649 | A2 | 31-03-2004 |
| | | | ES | 2277011 | T3 | 01-07-2007 |
| JP 2008091807 | A | 17-04-2008 | NONE | | | |
| WO 2011089999 | A1 | 28-07-2011 | NONE | | | |
| EP 2019433 | A1 | 28-01-2009 | CN | 101375408 | A | 25-02-2009 |
| | | | EP | 2019433 | A1 | 28-01-2009 |
| | | | JP | 2007311487 | A | 29-11-2007 |
| | | | KR | 20090016443 | A | 13-02-2009 |
| | | | US | 2009000659 | A1 | 01-01-2009 |
| | | | WO | 2007132616 | A1 | 22-11-2007 |
| AT 508834 | A1 | 15-04-2011 | AT | 508834 | A1 | 15-04-2011 |
| | | | WO | 2011041819 | A2 | 14-04-2011 |
| JP 2003121490 | A | 23-04-2003 | NONE | | | |

EPO FORM P0459

For more details about this annex : see Official Journal of the European Patent Office, No. 12/82

23